# EUROPEAN PATENT APPLICATION

(11) **EP 4 764 417 A1**
(43) Date of publication of application: **24.06.2026**
(21) Application number: 24222795.7
(22) Date of filing: 23.12.2024
(51) Int. Cl.: G01C 21/34, G01C 21/36

(54) **INCREMENTAL GENERATION OF A LANE RECOMMENDATION**

(71) Applicant: TomTom Navigation B.V., 1011 AC Amsterdam (NL)
(72) Inventor: EXON, Matthew, 1011 AC Amsterdam (NL); GUGGINO, Massimo, 1011 AC Amsterdam (NL); PEINHARDT, Matthias, 1011 AC Amsterdam (NL)
(74) Representative: Bardehle Pagenberg Partnerschaft mbB Patentanwälte Rechtsanwälte

(57) **Abstract**

The present invention relates to a computer-implemented method (200), a system, a computer program and a vehicle, for generating a lane recommendation for a drive of a vehicle (110) along a route (120). The method (200) comprises obtaining (210) first road-level data for a first part (130) of the route (120), wherein the first road-level data is associated with a set of manoeuvre points (140a-140j) for the drive of the vehicle (110). The method (200) further comprises computing (220), based on first lane-level data, a first lane recommendation associated with a second part (150) of the route (120), the first lane recommendation reaching from a current position of the vehicle to an end point (155) of the second part (150), wherein the end point (155) of the second part (150) is located in a vicinity of a first safe stretch (170). Specifically, the first safe stretch (170) comprises a portion associated with the first part (130) of the route without manoeuvre points (140a-140j) and/or a portion associated with the first part (130) of the route without a change in a lane configuration.

## Description

### Field of the invention

The present invention relates to a method, a device and a computer program for generating a lane recommendation for a drive of a vehicle.

### Technical background

Providing drivers of a vehicle and/or the vehicle itself with digital information, e.g., map information, during a drive is at the heart of driver assistance technology. In particular, such digital information is adapted to ease the drive of the driver and to enhance the driving safety.

One major stress factor during a drive is to find the correct lane of a road. For example, a road may comprise multiple lanes that may branch off in multiple directions. This can lead to confusing situations, especially for roads with a high traffic density and/or for roads with a distorted visibility of the lane markings.

Therefore, there have been attempts to support the driver of the vehicle by providing lane guidance. However, as a road may comprise multiple lanes and lanes may branch off in multiple directions and/or multiple lanes may join the road, the computation of a lane guidance becomes computationally expensive. This may render the generation of a lane guidance along a complete route unfeasible, e.g., at least for the computation devices typically found in passenger cars. On top of that, a computation of the lane guidance along the complete route would require that road data is available at a lane resolution along the complete route. Thus, road data at a lane resolution must be transmitted to the vehicle for the complete route, resulting in a huge amount of data that has to be transmitted to the vehicle.

In view of the above disadvantages, it has been proposed to provide lane guidance to the driver at certain decision points, e.g., at crossroads or along an exit of a highway. Thus, guidance is given to a user at isolated points of the route. However, as this isolated lane guidance treats each decision point separately and independent of other decision points, the recommended lanes at different decision points may be incompatible, resulting in sudden actions and/or manoeuvres that have to be conducted by the driver. Thus, there may be situations where, instead of supporting the driver during the drive, incompatible lane recommendations are provided to the driver, which may increase the stress level of the driver, thereby rendering an accident during the drive more likely.

Therefore, there is a need for an improved method for generating a lane recommendation for a drive of a vehicle, addressing at least some of the above-described disadvantages and further improving other aspects.

### Summary of the invention

A first aspect relates to a computer-implemented method for generating a lane recommendation for a drive of a vehicle along a route. The computer-implemented method comprises obtaining first road-level data for a first part of the route, wherein the first road-level data is associated with a set of manoeuvre points for the drive of the vehicle. The method further comprises computing, based on first lane-level data, a first lane recommendation associated with a second part of the route, wherein the first lane recommendation reaches from a current position of the vehicle to an end point of the second part. Specifically, the end point of the second part is located in a vicinity of a first safe stretch. The safe stretch comprises a portion associated with the first part of the route without manoeuvre points. In addition, or alternatively, the safe stretch comprises a portion associated with the first part of the route without a change in a lane configuration.

Obtaining first road-level data for the first part of the route may comprise obtaining data associated with the first part of the route at a road-level resolution, e.g., data comprising information of roads of a road network. The data comprising information of roads of the road network may be such that the data does not comprise finer information and/or finer data of the road. Finer information and/or finer data of the road may comprise information and/or data of at least one lane of the road. Generally, a road of a road network may comprise a plurality of lanes. For example, the road may comprise a first lane and a second lane. Road-level data of the road may comprise a coarse-graining of the lanes of the road. In particular, the road-level data of the road may be such as to combine the first lane and the second lane to a corresponding road.

Lane-level data associated with a road comprises information and/or data of the road at a lane resolution, e.g., comprising information and/or data about individual lanes of the road. For example, the road may comprise a first lane and a second lane. Lane-level data and/or information may comprise data and/or information such that the first lane and the second lane are distinguishable. Specifically, road-level data of a route may be based on a coarse-graining of corresponding (finer) lane-level data of the road.

In some embodiments, the route may be based on a route guidance. In addition, or alternatively, the route may be based on a drive of the vehicle without route guidance. For example, the route may be based on a drive of the vehicle, wherein the vehicle deviates from a route guidance. Alternatively, the drive of the vehicle may comprise a drive without route guidance. Specifically, the route may comprise an expected and/or anticipated route of the vehicle. For example, the expected and/or anticipated route of the vehicle may comprise at least a part of a road, e.g., a part of a road extending from a current position of the vehicle. The expected and/or anticipated route of the vehicle may comprise at least a part of a road that the vehicle is likely to follow, e.g., based on a current position of the vehicle. In some embodiments, the expected and/or anticipated route of the vehicle comprises a first route and a second route. For example, the first route may comprise a most likely route of the vehicle and the second route may comprise a second likely route of the vehicle. Specifically, the most likely route of the vehicle may be associated with a first probability and the second likely route may be associated with a second probability. In particular, the first probability may be larger than (or equal to) the second probability. Generally, the second part of the route may be a sub-part of the first part of the route. For example, the second part of the route may be a stretch of the first part of the route. Specifically, the first part of the route may at least partially comprise the second part of the route.

The end point of the second part located in a vicinity of the first safe stretch may comprise that the end point of the second part is located at a beginning of the first safe stretch. For example, the end point of the second part may essentially correspond to the beginning of the first safe stretch. In addition, or alternatively, that the end point of the second part is located in a vicinity of the first safe stretch may comprise that the end point of the second part is located within the first safe stretch, e.g., the second part may at least partially extend into the first safe stretch. Specifically, the end point of the second part may be located within the first 40% of the first safe stretch, preferably the first 30% of the first safe stretch, most preferably within the first 20% of the first safe stretch. In addition, or alternatively, the end point of the second part may be located within the last 40% of the first safe stretch, preferably the last 30% of the first safe stretch, most preferably within the last 20% of the first safe stretch. In some embodiments, the end point of the second part may be located at a mid-point of the first safe stretch. In addition, or alternatively, the end point of the second part may be located at an end of the first safe stretch. For example, the end point of the second part may essentially correspond to an end point of the first safe stretch.

Specifically, a distance between the end point of the second part and the first safe stretch may be smaller than a pre-defined threshold. Specifically, the distance between the end point of the second part and the first safe stretch may comprise a distance between the end point of the second part and a beginning of the first safe stretch. Generally, the distance between the end point of the second part and a beginning of the first safe stretch may comprise a distance along the route, e.g., along a road of the route connecting the end point of the second part and the beginning of the safe stretch. Specifically, the distance along the route may comprise a distance which is at least partially based on a curvature of the route and/or road. The pre-defined threshold may comprise a threshold of at most 10 km, preferably at most 6 km, more preferably at most 2 km, even more preferably at most 1 km, most preferably at most 0.5 km.

A manoeuvre point of a road may comprise a portion, e.g., a point, of the road associated with a possible manoeuvre of the vehicle. A possible manoeuvre of the vehicle may comprise an action that the driver of the vehicle possibly must conduct. Specifically, the manoeuvre point may comprise a road crossing, e.g., a point of the road, where the road splits into two roads, e.g., a first road and a second road. In particular, the driver of the vehicle may follow the first road or the second road. In other words, the driver of the vehicle may conduct a manoeuvre in order to follow the first road or the second road. In addition, or alternatively, a manoeuvre point may comprise a junction of roads.

Obtaining first road-level data for the first part, wherein the first road-level data is associated with a set of manoeuvre points, may comprise that first road-level data is obtained and that the associated set of manoeuvre points is computed and/or generated based on the first road-level data. In other words, the first road-level data for the first part may be obtained such that the first road-level data for the first part does not (explicitly) comprise the associated set of manoeuvre points, e.g., the associated set of manoeuvre points may be determined and/or computed in a subsequent step. In addition, or alternatively, the first road-level data for the first part may be obtained such that the (obtained) first-road level data comprises at least one associated manoeuvre point. For example, the first road-level data may comprise a first set of associated manoeuvre points. Specifically, the first set of associated manoeuvre points may comprise a subset of manoeuvre points of the first part, e.g., the first set of associated manoeuvre points may not comprise a complete set of manoeuvre points that could be associated with the first part. In particular, a second set of manoeuvre points may be determined and/or computed based on the first road-level data and/or based on the first set of manoeuvre points. For example, the second set of associated manoeuvre points may be determined and/or computed such that a union of the first set of manoeuvre points and the second set of manoeuvre point forms a complete set of manoeuvre points for the first part. In some embodiments, the first road-level data for the first part comprises a complete set of associated manoeuvre points. In other words, the first set of associated manoeuvre points may be such that a further determination and/or computation of the second set of manoeuvre points is unneeded.

The first safe stretch may comprise a portion associated with the first part of the route without manoeuvre points, e.g., a stretch of the first part of the route. The first safe stretch may comprise at least a part of a road associated with the stretch of the first part of the route. A stretch without manoeuvre points may comprise a stretch that is not associated with manoeuvre points. For example, the first safe stretch may comprise a portion associated with the first part of the route without manoeuvre points such that a size of the first safe stretch is at maximum. In other words, the first safe stretch may be such as to extend between two consecutive manoeuvre points, e.g., extending the safe stretch to a maximum size between two consecutive manoeuvre points.

In addition, or alternatively, the first safe stretch may comprise a portion associated with the first part of the route without a change in a lane configuration, e.g., a lane configuration associated with at least a portion of the first part of the route. Generally, a change in a lane configuration may comprise a lane split. For example, a lane may split into a first lane and a second lane, e.g., maintaining the (original) lane as the first lane and adding a (new) second lane emerging from the (original) lane. In addition, or alternatively, a change in a lane configuration may comprise a lane merge. For example, a first lane and a second lane may merge into a (single) lane. The first lane and the second lane may comprise neighbouring lanes. For example, merging the first lane and the second lane may comprise that the second lane merges into the first lane.

Computing and/or generating the first lane recommendation such that the first lane recommendation reaches from a current position of the vehicle to an end point located in a vicinity of a first safe stretch allows for an incremental computation of the lane recommendation for the drive of the vehicle. In particular, computing and/or generating the first lane recommendation to the end point located in a vicinity of the first safe stretch ensures that the incrementally computed and/or determined lane recommendations for consecutive parts of the route appear to the driver as a continuous and global lane recommendation, e.g., a lane recommendation that has been determined and/or computed for the whole route at once. Specifically, as the end of the first lane recommendation ends in a vicinity of the first safe stretch and the first safe stretch is not associated with and/or does not comprise manoeuvre points, at the end of the first lane recommendation, all lanes of the road can be recommended to the driver, as no action of the driver is required when passing through the first safe stretch.

Providing the lane recommendation to the driver of the vehicle such that the lane recommendations for consecutive parts of the route appear to the driver as a continuous and global lane recommendation minimizes and/or avoids the appearance of sudden actions and/or manoeuvres that must be conducted by the driver, e.g., a sudden change of a lane and/or a sudden change of a road via a junction. The minimization and/or avoidance of sudden actions and/or manoeuvres that must be conducted by the driver minimizes the stress level of the driver, maximizes the driving safety of the driver and thus optimizes the convenience of the drive.

In addition, the incremental computation of lane recommendations for the drive of the vehicle minimizes a computational cost that is associated with the determination and/or computation of the respective lane recommendation. In particular, as the lane recommendation is not computed as once for the whole trip, but only for smaller parts of the route, the amount of data that must be processed in the determination and/or computation of the lane recommendation is significantly reduced, minimizing the computational time and the required computational resources. Furthermore, an energy consumption associated with the computation of the lane recommendation is minimized, such that a power efficiency of the computation is optimized.

In addition, the incremental computation of lane recommendations for the drive of the vehicle minimizes an amount of data that has to be transferred to the vehicle. In particular, the data, e.g., lane-level data, that has to be transferred (at once) to the vehicle is reduced to the amount of data necessary to compute the lane recommendation for the second part. Thus, instead of transferring the lane-level data for the whole route of the drive, the lane-level data is transferred incrementally for the second part. Transferring the data, e.g., the lane-level data, incrementally enables a more flexible transfer of data, as the data can be adapted to the actual drive of the vehicle, e.g., when the vehicle deviates from a route guidance. In addition, transferring the data, e.g., the lane-level data, incrementally renders the method for generating the lane-recommendation more robust against network connectivity loss.

Generally, the second part may be a sub-part of the first part.

For example, the second part may be comprised within the first part. Specifically, the second part may be a stretch of the first part, e.g., the second part follows a part of the first part. In particular, the second part may be associated with and/or may comprise at least partially the first road-level data of the first part. For example, the second part of the route may inherit the road-level data from the first part.

A second part of the route that is a sub-part of the first part allows for computing the first lane recommendation associated with the second part such that the first lane recommendation reaches an end point of the second part located in a vicinity of a first safe stretch. In particular, as the second part is a sub-part of the first part, the end point of the second part, e.g., a point along the route within the first part, can be chosen such that the end point is located within a vicinity of the first safe stretch, wherein the first safe stretch is based on a set of manoeuvre points associated with the first part. In other words, by inheriting the road-level data from the first part, the second part also inherits the manoeuvre points from the first part. Inheriting the manoeuvre points from the first part allows for choosing the end point of the second part (within the first part) such that the end point of the second part is located in a vicinity of the first safe stretch.

In general, the computer-implemented method for generating the lane recommendation may further comprise computing, based on second lane-level data associated with a third part of the route, a second lane recommendation associated with the third part to an end point of the third part, wherein the end point of the third part is located in a vicinity of a second safe stretch. Specifically, the second safe stretch may comprise a portion associated with the first part of the route without manoeuvre points. In addition, or alternatively, the second safe stretch may comprise a portion associated with the first part of the route without a change in a lane configuration.

The third part of the route may be a sub-part of the first part. Specifically, the third part of the route may be a sub-part of the first part such as to join the second part of the route, e.g., joining another sub-part of the first part. For example, the third part may be a consecutive part with respect to the second part. Similarly to the second part, the third part may essentially follow the route of the vehicle, e.g., the route of the vehicle within the first part. Specifically, the third part may inherit at least a portion of the road-level data of the first part and/or may inherit at least a portion of the manoeuvre points associated with the first part.

Computing and/or generating the second lane recommendation such that the second lane recommendation associated with the third part extends to an end point of the third part located in a vicinity of the second safe stretch allows for an incremental computation of the lane recommendation for the drive of the vehicle.

Specifically, the second lane recommendation may be computed such as to continue the first lane recommendation associated with the second part over the third part.

For example, the second part and the third part may be consecutive and/or joining parts of the route. In other words, an end point of the second part may essentially correspond to a start point of the third part. For example, the second part and the third part may be such that road-level data associated with the second part is continued by road-level data associated with the third part. Specifically, the road-level data associated with the third part may continue the road-level data associated with the second part such as to form continuous road-level data between the second part and the third part.

In addition, or alternatively, the second lane recommendation associated with the third part may be computed such as to continue the first lane recommendation associated with the second part. For example, continuing the first lane recommendation by the second lane recommendation may comprise computing the second lane recommendation at least partially based on the first lane recommendation. Specifically, continuing the first lane recommendation by the second lane recommendation may comprise that the second lane recommendation smoothly continues the first lane recommendation, e.g., without introducing sudden actions and/or manoeuvres located at the end of the first lane recommendation and/or the beginning of the second lane recommendation. In other words, computing the second lane recommendation such as to continue the first lane recommendation over the third part may comprise that the lane recommendation provided to the driver of the vehicle appears as a continuous lane recommendation.

Generally, the first safe stretch may be configured such that a length associated with the respective safe stretch is longer than a pre-defined threshold. In addition, or alternatively, the second safe stretch may be configured such that a length associated with the respective safe stretch is longer than a pre-defined threshold.

A length associated with a safe stretch, e.g., the first and/or second safe stretch, may comprise a length of the safe stretch along a part of the route. In other words, the length of the safe stretch may comprise a length of a path along the route, wherein the path corresponds to the safe stretch. Specifically, the length of the safe stretch may be based on a curvature of the part of the route associated with the safe stretch. In some embodiments, the length of the route may be based on an integration, e.g., an integration of the route with respect to the safe stretch. An integration with respect to the safe stretch may comprise that a boundary of the integral may be based on the safe stretch. In addition, or alternatively, the length of the safe stretch may be based on a length of a polygonal chain. For example, the safe stretch and/or the part of the route associated with the safe stretch may comprise a polygonal chain. Specifically, the length of the safe stretch may be based on a length of consecutive line segments of the polygonal chain.

Configuring the safe stretch such that the length of the safe stretch is larger than a pre-defined threshold may comprise determining a stretch of the route whose length is larger than the pre-defined threshold and wherein the stretch is not associated with manoeuvre points. In addition, or alternatively, the pre-defined threshold may comprise a threshold defined by a user, e.g., the driver of the vehicle. In addition, or alternatively, the pre-defined threshold may comprise a pre-programed threshold. In addition, or alternatively, the pre-defined threshold may be based on the drive of the vehicle, e.g., may be based on a road class associated with the route and/or a velocity of the vehicle.

Configuring the safe stretch such that the length of the safe stretch is larger than a pre-defined threshold ensures that the vehicle has sufficient time for obtaining the first and/or second lane-level data. In addition, a safe stretch with a length larger than a predefined threshold ensures that the vehicle has sufficient time for computing the first and/or second lane recommendation, e.g., based on the obtained first and/or second lane-level data. Specifically, the first lane recommendation may only be computed up to the beginning of a safe stretch and lane-level data may only be available up to the beginning of the safe stretch. Thus, for the computation of the second lane recommendation, further lane-level data and a further computation may be needed. As the safe stretch is associated with a portion of the route without manoeuvre points and/or a change in a lane configuration, it is possible to recommend all lanes of the road within the safe stretch, e.g., all lanes in the safe stretch may be equivalent. Therefore, while the vehicle travels along the safe stretch, second lane-level data can be obtained and a second lane recommendation can be computed. Thus, configuring the safe stretch such that the length of the safe stretch is larger than a pre-defined threshold allows for the incremental computation of the lane recommendation. In particular, the required pre-defined length of the safe stretch contributes to the provision of a continuous lane recommendation to the driver (although the lane recommendations are computed incrementally), maximizes the resilience of the generation of the lane recommendation against network connectivity loss and thus optimizes the driving safety.

Specifically, the pre-defined threshold may be at least 1 km. Alternatively, the pre-defined threshold may be at least 2 km. Alternatively, the pre-defined threshold may be at least 3 km. In addition, or alternatively, the pre-defined threshold may be at most 15 km. Alternatively, the pre-defined threshold may be at most 10 km. Alternatively, the pre-defined threshold may be at most 8 km. Alternatively, the pre-defined threshold may be at most 6 km. Alternatively, the pre-defined threshold may be at most 3 km.

A safe stretch associated with a length larger than 1 km ensures that a time that the vehicle needs to travel along the safe stretch is sufficiently large. A sufficiently large travel time of the vehicle along the safe stretch guarantees that lane-level data for the computation of the next lane recommendation can be obtained, e.g., downloaded. Thus, a safe stretch associated with a length larger than 1 km contributes to the resilience of the generation of the lane recommendation against network connectivity loss and thus optimizes the driving safety.

In addition, a safe stretch associated with length smaller than 15 km ensures that the route comprises a safe stretch of required length. In particular, the route may not comprise a safe stretch with a length of more than 15 km. Generally, a length of the safe stretch smaller than 15 km maximizes a probability of existence of a safe stretch within the route, thereby enabling the incremental generation of the lane recommendation. For example, the probability of existence of a safe stretch may increase when a required length of the safe stretch decreases. In other words, the route may comprise more shorter safe stretches than longer safe stretches, e.g., as each shorter safe stretch may be comprised in a respective longer safe stretch.

Generally, computing the first lane recommendation may be based on an optimization of a cost function. In addition, or alternatively, computing the second lane recommendation may be based on an optimization of a cost function.

An optimization of a cost function may comprise a minimization and/or a maximization of a cost function. For example, the first and/or second lane recommendation may be computed such that the first and/or second lane recommendation optimizes the cost function, e.g., the first and/or second lane recommendation may comprise a lane recommendation that maximizes and/or minimizes the cost function. Specifically, the cost function may comprise a mapping such that a lane recommendation is assigned a number, e.g., a complex and/or real and/or rational and/or an integer number. In some embodiments, the cost function may comprise a mapping such that a lane recommendation is assigned a vector and/or a tuple of numbers. For example, the cost function assigning a vector to a lane recommendation may comprise an optimization of the lane recommendation with respect to a plurality of objective functions, e.g., functions with respect to which the lane recommendation should be optimal. An optimization of the lane recommendation with respect to a plurality of objective functions may comprise a Pareto-optimization.

The optimization of the cost function may comprise an analytic and/or numerical optimization of the cost function. For example, a numerical optimization of the cost function may comprise a gradient descent optimization. Computing the first and/or second lane recommendation such that the first and/or second lane recommendation optimizes the cost function may comprise that the first and/or second lane recommendation comprises a global optimizer, e.g., a lane recommendation yielding a global optimum of the cost function. In addition, or alternatively, the optimization of the cost function may comprise that the first and/or second lane recommendation comprises a local optimizer, e.g., the first and/or second lane recommendation yields a local optimum value, e.g., a local maximum and/or a local minimum, of the cost function. Specifically, yielding a global and/or local optimum value of the cost function may comprise that the value of the cost function associated with the first and/or second lane recommendation is located in a vicinity of the global and/or local optimum value of the cost function, e.g., up to a numerical precision of the computation.

Computing the first and/or second lane recommendation based on an optimization of a cost function allows for the computation of an optimized lane recommendation with respect to an objective, e.g., an objective defining the cost function. Specifically, computing the first and/or second lane recommendation based on the optimization turns the computation and/or determination of the first and/or second lane recommendation into a numerical task. In particular, turning the computation and/or determination of the first and/or second lane recommendation into a numerical task allows for applying efficient numerical and/or analytical optimization tools, rendering an efficient (and numerically stable) computation of the first and/or second lane recommendation possible.

Specifically, the cost function may be based on a number of required lane changes. In addition, or alternatively, the cost function may be based on an expected driving time.

The cost function may be based on a number of actions that a driver has to perform when traveling according to the lane recommendation. For example, the number of actions may comprise a number of required lane changes, e.g., a number quantifying the lane changes that are required (to be performed by the driver) when the vehicle travels according to the lane recommendation. For example, the cost function may associate with a lane recommendation a number of actions, e.g., a number of lane changes.

A cost function that is based on a number of required lane changes, e.g., computing the lane recommendation such as to minimize the number of required lane changes, allows for minimizing the actions that have to be performed by the driver of the vehicle when travelling along the part of the route associated with the lane recommendation. Minimizing the actions that have to be performed by the driver minimizes the risk of an accident of the vehicle during the drive, minimizes a stress of the driver and thus optimizes the driving safety.

In addition, or alternatively, the cost function may be based on an expected driving time. For example, the cost function may assign to a lane recommendation an expected driving time. Specifically, the expected driving time may be based on a speed limit associated with the part of the route for which the lane recommendation has to be computed. In addition, or alternatively, the expected driving time may be based on a current velocity of the vehicle and/or a past velocity of the vehicle (history of velocities) and/or an expected velocity of the vehicle. In addition, or alternatively, the expected driving time may be based on a road class associated with the part of the route for which the lane recommendation has to be computed and/or on past/current traffic data associated with the part of the route for which the lane recommendation has to be computed. In addition, or alternatively, the computation of the expected driving time may be based on an artificial intelligence, e.g., an artificial intelligence trained at least partially based on a current velocity of the vehicle and/or a past velocity of the vehicle and/or a driving behaviour of the vehicle and or driver of the vehicle.

A cost function that is based on an expected driving time, e.g., computing the lane recommendation such as to minimize the expected driving time, enables the computation of a fastest lane recommendation, thereby minimizes the energy consumption of the vehicle, e.g., electricity and/or fuel, thus optimizes the efficiency of the drive.

In some embodiments, computing the second lane recommendation may comprise obtaining second road-level data for a fourth part of the route, wherein the fourth part of the route extends the first part along the route.

Specifically, the first part of the route may not cover the complete route. Specifically, a remaining part of the complete route, e.g., the complete route without the first part of the route, may comprise a fourth part. For example, the fourth part may extend the first part along the route. Extending the first part along the route may comprise that the first part and the fourth part are adjacent and/or consecutive parts. For example, the fourth part may continue the first part along the route. Generally, road-level data may be available only for the first part, e.g., road-level data may not be available for the complete fourth part. For example, when road-level data may not be available for the complete fourth part, second road-level data for the fourth part may be obtained. In other words, road-level data associated with the route may be obtained incrementally. For example, initially first road-level data may be obtained for a first part of the route. Then, second road-level data may be obtained for a fourth part of the route.

Obtaining second road-level data for a fourth part of the route extending the first part along the route allows for an incremental computation of the lane recommendation. In particular, the road-level data can be obtained iteratively for parts of the route, e.g., for the first part of the route and for the fourth part of the route, thus rendering a download of the complete road-level data at once (the road-level data for the complete route) dispensable. Therefore, the incremental obtaining of the road-level data contributes to a minimization of an amount of data that has to be transferred to the vehicle (at once, i.e., in one transmission) and to a maximization of the robustness of the method for generating the lane recommendation against network loss connectivity.

Specifically, the second road-level data for the fourth part may be obtained when the first part does not comprise at least two consecutive safe stretches extending beyond the second part and/or the third part. For example, the second road-level data for the fourth part may be obtained such that the second road-level data for the fourth part comprises a safe stretch.

For example, the second road-level data for the fourth part of the route may be obtained when the first part of the route does not comprise at least two consecutive safe stretches that extends beyond the second part of the route. In addition, or alternatively, the second road-level data for the fourth part of the route may be obtained when the first part of the route does not comprise at least two consecutive safe stretches that extends beyond the third part of the route. Extending beyond the second and/or third part of the route may comprise extending the second and/or third part of the route with respect to a travel direction of the vehicle along the route. For example, a part of the route that extends beyond the second and/or third part may comprise a part that succeeds on the second and/or third part. In other words, the second road-level data for the fourth part of the route may be obtained when the first part of the route does not comprise at least two consecutive safe stretches that follow on the second and/or third part of the route.

For example, an end point of the second part may be located in a vicinity of the first safe stretch. Specifically, the end point of the second part may be located at a beginning of the first safe stretch and/or located within the first safe stretch and/or located at an end of the first safe stretch. In each case, the first safe stretch may comprise a safe stretch extending beyond the second part. In particular, when the end point of the second part is located at the beginning of the first safe stretch, the first safe stretch may extend beyond the second part. Similarly, when the end point of the second part is located within the first safe stretch, the first safe stretch may extend beyond the second part, e.g., there exists at least a part of the first safe stretch extending beyond the (end point of the) second part. Similarly, when the end point of the second part is located at the end of the first safe stretch, the first safe stretch may extend beyond the second part, e.g., may be deemed to extend beyond the second part. However, apart from the first safe stretch, the first part may not comprise a further safe stretch extending beyond the second part, e.g., the first part of the route may be associated with manoeuvre points and/or lane configuration changes such that the first part of the route does not comprise a further safe stretch extending beyond the second part (apart from the first safe stretch). Thus, the first part may not comprise two consecutive safe stetches extending beyond the second part. When the first part does not comprise two consecutive safe stretches extending beyond the second part, second road-level data for the fourth part may be obtained.

Specifically, second road-level data for the fourth part may be obtained such that the second road-level data for the fourth part comprises a safe stretch, e.g., by adapting a length of the fourth part such that the fourth part comprises a safe stretch. For example, adapting the length of the fourth part such that the fourth part comprises a safe stretch may comprise to (incrementally) extend the fourth part, e.g., incrementally increasing the length of the fourth part. In addition, or alternatively, obtaining the second road-level data for the fourth part such that the second road-level data comprises a safe stretch may comprise adapting, e.g., shortening, the pre-defined length of the safe stretch.

In addition, or alternatively, the second road-level data for the fourth part may be obtained based on a current position of the vehicle. In particular, the second road-level data for the fourth part may be obtained when the current position of the vehicle approaches an end point of the first part.

For example, the second road-level data for the fourth part may be obtained based on a current position of the vehicle along the route. An end point of the first part may comprise a part of the first part up to which road-level data is available, e.g., beyond the end point of the first part (further) road-level data may not be available (yet). Obtaining the second road-level data for the fourth part when the current position of the vehicle approaches the end point of the first part may comprise that a distance between the current position of the vehicle and the end point of the first part falls below a threshold, e.g., when the distance becomes smaller or equal to the threshold. Specifically, the distance may comprise a distance between the current position of the vehicle and the end point of the first path along the route. For example, the threshold may be at least 1 km, preferably at least 2 km, more preferably at least 3 km, even more preferably at least 4 km, most preferably at least 5 km. In addition, or alternatively, the threshold may be at most 50 km, preferably at most 40 km, more preferably at most 30 km, even more preferably at most 20 km, most preferably at most 10 km.

In addition, or alternatively, the second road-level data for the fourth part may be obtained based on a predefined and/or expected time interval of the vehicle. For example, the second road-level data for the fourth part may be obtained based on a travel time from the current position of the vehicle towards the end point of the first part.

For example, the travel time from the current position of the vehicle towards the end point of the first part may comprise an expected travel time of the vehicle. For example, the expected travel time of the vehicle from the current position of the vehicle towards the end point of the first part may be at least partially based on a road class associated with a part of the first part extending beyond the current position of the vehicle. In addition, or alternatively, the expected travel time of the vehicle from the current position of the vehicle towards the end point of the first part may be at least partially based on a speed limit associated with a part of the first part extending beyond the current position of the vehicle.

Specifically, computing the second lane recommendation based on the second lane-level data associated with the third part may comprise obtaining the second lane-level data for the third part of the route. For example, obtaining the second lane-level data may comprise downloading the second lane-level data from a server. In addition, or alternatively, obtaining the second lane-level data may comprise downloading the second lane-level data from a cloud storage.

Similarly, obtaining the first lane-level data may comprise downloading the first lane-level data from a server and/or a cloud storage. In addition, or alternatively, obtaining the first and/or second road-level data may comprise downloading the first and/or second road-level data from a server and/or a cloud storage. For example, the road-level data and the lane-level data may be downloaded from the same server and/or same cloud storage.

In particular, the second lane-level data for the third part may be obtained for a part of the route bounded by the start points of two consecutive safe stretches.

For example, the part of the route may be bounded by a first safe stretch and a second safe stretch. The first and the second safe stretch may comprise consecutive safe stretches, e.g., there may be no further safe stretch in the part of the route that is bounded by the first and the second safe stretch. In other words, when travelling from the first safe stretch to the second safe stretch along the route, no further safe stretch will be traversed. Bounding a part of the route by the start points of two consecutive safe stretches may comprise that the part originates at a first start point and that the part ends at a second start point. For example, the first start point may comprise a start point of the first safe stretch and the second start point may comprise a start point of the second safe stretch. In other words, the part along the route comprises the first safe stretch but not the second safe stretch.

Bounding the third part, for which the second lane-level data is obtained, by the start points of two consecutive safe stretches ensures that the part of the route for which lane-level data is available ends before a safe stretch, e.g., before the start point of the second safe stretch. As the part of the route for which lane-level data is available ends before a safe stretch, it can be ensured that in a subsequent part (a part subsequent to the part for which lane-level data is available) no sudden and/or unexpected action, e.g., no sudden and/or unexpected manoeuvre, has to be conducted by the driver of the vehicle. In particular, the subsequent part is at least partially comprised in the safe stretch and the safe stretch is a part of the route without manoeuvre points and/or changes in a lane configuration.

Therefore, bounding the third part, for which the second lane-level data is obtained, by the start points of two consecutive safe stretches contributes to the provision of the lane recommendation in a continuous form (although the lane recommendation is computed incrementally) as sudden and/or unexpected manoeuvres can be avoided.

Generally, the computer-implemented method for generating the lane recommendation may comprise an iteration. For example, the iteration may comprise computing a (N+1)^{th} lane recommendation for the drive of the vehicle associated with a (N+1)^{th} sub-part of at least one M^{th} part. In particular, the (N+1)^{th} lane recommendation may continue the N^{th} lane recommendation over the (N+1)^{th} sub-part.

The generation of the lane recommendation may comprise an iterative and/or incremental generation of the lane recommendation, e.g., computing the (N+1)^{th} lane recommendation for N = 0, ..., Nₘₐₓ. Specifically, the (N+1)^{th} lane recommendation may be computed such as to continue the N^{th} lane recommendation over the (N+1)^{th} sub-part, e.g., the (N+1)^{th} lane recommendation may be based on the lane recommendation computed in the previous iteration, i.e., in the N^{th} iteration.

Generally, the M^{th} part of the route may be associated with road-level data. In particular, the road-level data of the M^{th} part may be associated with manoeuvre points. The

M^{th} part of the route may comprise at least one sub-part. For example, the M^{th} part of the road may comprise *n_{M}* sub-parts. Specifically, the M^{th} part may be associated with at least one safe stretch. In particular, the M^{th} part of the road may be associated with the at least one safe stretch based on the manoeuvre points associated with the M^{th} part and/or based on a change in a lane configuration associated with the M^{th} part. For example, an end point of a sub-part of the M^{th} part may be located in a vicinity of a safe stretch of the M^{th} part. In other words, while the M^{th} part may comprise road-level data, the *n_{M}* subparts of the M^{th} part may comprise lane-level data.

For example, road-level data for a first part (M=1) of the route may be obtained. For example, the first part (M=1) may comprise a safe stretch. In particular, the first part (M=1) may comprise a first safe stretch and a second safe stretch. In a first step of the iteration (N=o), a first lane recommendation associated with a first sub-part (N=0) of the first part (M=1) may be computed. Specifically, an end point of the first sub-part (N=0) may be located in a vicinity of the first safe stretch, e.g., in a vicinity of a beginning of the first safe stretch. In particular, the first lane recommendation may be computed such that the first lane recommendation reaches to the end point of the first sub-part. Computing the first lane recommendation associated with the first (N=0) sub-part may comprise obtaining, e.g., downloading, lane-level data for the first (N=0) sub-part of the first (M=0) part of the route.

In a subsequent step (N=1), a second (N=1) lane recommendation may be computed for a second (N=1) sub-part of the first (M=0) part of the route. The second (N=1) lane recommendation may continue the first (N=0) lane recommendation over the second (N=1) sub-part. Specifically, an end point of the second (N=1) sub-part may be located in a vicinity of the second safe stretch associated with the first (M=1) part of the route. For example, the second (N=1) lane recommendation may be computed such that the second (N=1) lane recommendation reaches the end point of the second (N=1) sub-part.

Specifically, the iteration may terminate when an end point of the (N+1)^{th} lane recommendation reaches a destination of the route.

For example, the destination of the route may comprise an end point of the route, e.g., a point where the drive of the vehicle terminates. Specifically, when the route is based on route guidance, the iteration may terminate when an end point of a lane recommendation reaches the end point and/or destination of the route. In addition, or alternatively, the destination and/or end point of the route may comprise an end point of an expected and/or anticipated route. For example, for a drive without route guidance and/or for a drive deviating from a route guidance, the expected and/or anticipated route may be obtained. In particular, the expected and/or anticipated route may be obtained based on a current position of the vehicle and/or based on a previous travel history of the vehicle and/or the driver.

An end point of the (N+1)^{th} lane recommendation reaching the destination of the route may comprise that the end point of the (N+1)^{th} lane recommendation may be located within a vicinity of the destination of the route. For example, the location of the end point of the (N+1)^{th} lane recommendation may essentially correspond to the location of the destination of the route. Specifically, the destination of the route may be located within the (N+1)^{th} sub-part to which the (N+1)^{th} lane recommendation is associated. For example, when the destination of the route is not located at an end point of the (N+1)^{th} sub-part, e.g., located within the (N+1)^{th} sub-part, the lane recommendation may only be computed up to the destination of the route. In other words, instead of computing the (N+1)^{th} lane recommendation such that the (N+1)^{th} lane recommendation reaches the end point of the (N+1)^{th} sub-part, the (N+1)^{th} lane recommendation may be computed such that the (N+1)^{th} lane recommendation (only) reaches the destination of the route. In addition, or alternatively, the destination of the route may be located within the (N+1)^{th} lane recommendation.

A further aspect is directed to an apparatus or a system comprising at least one processing unit. The at least one processing unit is configured to perform the above-described computer-implemented method.

Another aspect is directed to an apparatus comprising a memory and at least one processor coupled to the memory, the at least one processor configured to: obtain first road-level data for a first part of the route, wherein the first road-level data is associated with a set of manoeuvre points for the drive of the vehicle; compute, based on first lane-level data, a first lane recommendation associated with a second part of the route, wherein the first lane recommendation reaches from a current position of the vehicle to an end point of the second part, wherein the end point of the second part is located in a vicinity of a first safe stretch, and wherein the safe stretch comprises at least one of: a portion associated with the first part of the route without manoeuvre points, and a portion associated with the first part of the route without a change in a lane configuration.

A further aspect relates to a computer program comprising instructions which, when the program is executed by a computer, cause the computer to carry out the above-described computer-implemented method.

Another aspect relates to a non-transitory computer-readable medium having program code recorded thereon, the program code executed by a processor and comprising: program code to obtain first road-level data for a first part of the route, wherein the first road-level data is associated with a set of manoeuvre points for the drive of the vehicle; program code to compute, based on first lane-level data, a first lane recommendation associated with a second part of the route, wherein the first lane recommendation reaches from a current position of the vehicle to an end point of the second part, wherein the end point of the second part is located in a vicinity of a first safe stretch, and wherein the safe stretch comprises at least one of: a portion associated with the first part of the route without manoeuvre points, and a portion associated with the first part of the route without a change in a lane configuration.

Another aspect of is directed to a vehicle. The vehicle comprises the above-described system. In addition, or alternatively, the vehicle comprises a computer to execute the above-described computer program.

Whether aspects are implemented as hardware or software means depends upon the particular application and design constraints imposed on the overall system. By way of example, an element, or any portion of an element, or any combination of elements may be implemented as a processing system that may include one or more processors. Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise.

Accordingly, in one or more exemplary embodiments, the functions described may be implemented in hardware, software, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that can be used to store computer executable code in the form of instructions or data structures that can be accessed by a computer.

It is noted that any combination of features that have been described above as belonging to certain embodiments/aspects of the present invention is also an embodiment of the present invention, provided such a feature combination is feasible, i.e., does not lead to any contradictions.

### Short description of the figures

In the following, exemplary embodiments of the invention are described with reference to the following figures:
- **Fig. 1A:**: Schematic illustration of an exemplary embodiment of the method for generating a lane recommendation for a drive of a vehicle;
- **Fig. 1B:**: Schematic illustration of an exemplary embodiment of the method for generating a lane recommendation for a drive of a vehicle, comprising the step of obtaining second road-level data for a fourth part;
- **Fig. 2:**: Flow diagram illustrating an exemplary embodiment of the method for generating a lane recommendation for a drive of a vehicle.
- **Fig. 3:**: Schematic illustration of an exemplary embodiment of a system for generating a lane recommendation for a drive of a vehicle.

### Detailed description of preferred embodiments

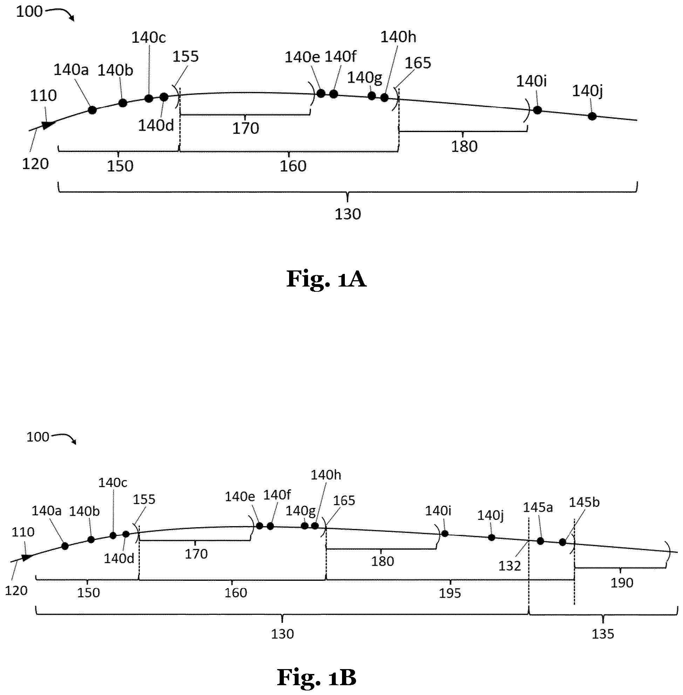

Figure 1A and 1B illustrate an exemplary embodiment of a method for generating a lane recommendation for a drive of a vehicle 110 along a route 120. For example, the vehicle 110 may be associated with a first position on the route 120. For example, associating the vehicle 110 with a first position on the route may be based on a position of the vehicle, e.g., a position of the vehicle based on a global positioning system (GPS). Specifically, associating the vehicle 110 with the first position on the route may comprise a matching of the position of the vehicle 110 with the route 120, e.g., computing and/or determining a position on the route closest to the position of the vehicle 110.

The route 120 may comprise a route based on route guidance, e.g., the route may be such as to guide the vehicle 110 to a (predetermined) destination. Alternatively, the route 120 may comprise an expected route and/or an anticipated route of the vehicle 110. An expected and/or anticipated route may comprise a route that the vehicle is most likely to follow, e.g., given the current position of the vehicle.

The vehicle 110 obtains first road-level data for a first part 130 of the route 120. The first part 130 of the route 120 is associated with a set of manoeuvre points 140a-140j for the drive of the vehicle 110. The first part 130 of the route 120 comprises a stretch of the route 120. In some embodiments, the first part 130 of the route 120 may comprise essentially the complete route 120, e.g., at least 90%, preferably at least 95% of the route 120. Alternatively, the first part 130 may comprise a subset of the route 120, e.g., a stretch along the route shorter than the complete route 120. In the situation described in Fig. 1A, the first part 130 of the route 120 essentially corresponds to the complete route 120. Obtaining the first road-level data for the first part 130 of the route 120 may comprise that the vehicle downloads the first road-level data from a server and/or cloud storage. For example, the vehicle may send a request to the server and/or cloud storage that road-level data for the first part 130 of the route 120 is required. Specifically, upon receiving the request from the vehicle, the server and/or cloud storage may send and/or transmit the road-level data to the vehicle 110.

The first part 130 of the route 120 is associated with manoeuvre points 140a-140j, e.g., points on the route where the driver has to perform a manoeuvre. For example, the manoeuvre points 140a-140j may be computed and/or determined based on the first road-level data for the first part 130. In particular, computing and/or determining the manoeuvre points 140a-140j based on the first road-level data for the first part 130 may comprise identifying manoeuvre points within the first road-level data. In addition, the first part 130 of the route 120 may be associated with a safe stretch 170, 180. For example, a safe stretch 170, 180 may comprise a portion of the first part 130 of the route 120 without manoeuvre points 140a-140j.

In addition, or alternatively, a safe stretch 170, 180 may comprise a portion of the first part 130 of the route 120 without a change in a lane configuration. Specifically, the safe stretch 170 comprises a portion of the first part 130 of the route 120 without manoeuvre points 140a-140j, e.g., along the safe stretch 170. Thus, when driving along the safe stretch 170, the driver of the vehicle 110 does not have to perform any manoeuvre. Similarly, the safe stretch 180 comprises a portion of the first part 130 of the route 120 without manoeuvre points 140a-140j, e.g., along the safe stretch 180. Thus, when driving along the safe stretch 180, the driver of the vehicle 110 does not have to perform any manoeuvre. The first 170 and/or the second 180 safe stretch may be longer than a pre-defined length. For example, the first safe stretch 170 may be associated with a first length and the second safe stretch 180 may be associated with a second length. Generally, the first length and the second length may be different, e.g., the first length may be larger than the second length. The first length and the second length may be larger than the pre-defined threshold. In some embodiments, the first length may be essentially equal, e.g., the first length may deviate from the second length by at most 10%, preferably at most 5%, more preferably at most 3%, most preferably at most 1%.

For example, a stretch along the route 120 between the manoeuvre points 140i and 140j, e.g., the stretch beginning at the manoeuvre point 140i and ending at the manoeuvre point 140j, could (at least in principle) be associated with a further safe stretch, as the stretch between the manoeuvre points 140i and 140j is not associated with further manoeuvre points. However, the length of the stretch along the route 120 between the manoeuvre points 140i and 140j may be smaller than the pre-defined length. In that case, the stretch may not constitute a safe stretch, since the pre-defined length requirement is not fulfilled.

Then, based on first lane-level data, a first lane recommendation associated with a second part 150 of the route 120 is computed. Specifically, the first lane recommendation associated with the second part 150 of the route 120 reaches from the current position of the vehicle 110 to an end point 155 of the second part 150. The second part 150 of the route is a sub-part of the first part 130 of the route 120, e.g., the second part 150 is a sub-stretch of the first part 130 of the route 120. As the second part 150 is a sub-part of the first part 130 of the route 120, road-level data may be available for the second part 150 of the route 120. For example, the second part 150 may inherit from the first road-level data of the first part 130 corresponding road-level data. The second part 150 is associated with manoeuvre points 140a, 140b, 140c, 140d. The end point 155 of the second part 150 is located in a vicinity of the first safe stretch 170. For example, the end point 155 may be located in a vicinity of manoeuvre point 140d. In other words, as the first safe region 170 comprises a portion of the first part 130 without manoeuvre points, the beginning of the first safe stretch 170 may essentially correspond to the (last) manoeuvre point associated with the second part 150, e.g., the manoeuvre point 140d. Similarly, the end point 155 of the second part 150 of the route 120 may be located in a vicinity of the (last) manoeuvre point 140d associated with the second part. For example, the first lane recommendation for the second part 150 may be computed based on an optimization of a cost function. In particular, the cost function may be based on a number of required lane changes and/or an expected driving time.

Furthermore, based on second lane-level data associated with a third part 160 of the route 120, a second lane recommendation associated with the third part 160 is computed. The second lane recommendation associated with the third part 160 reaches to an end point 165 of the third part 160. Specifically, the end point 165 of the third part 160 is located in a vicinity of the second safe stretch 180. The third part 160 of the route 120 is a sub-part of the first part 130 of the route 120. Specifically, the third part 160 of the route 120 continues the second part 150 of the route 120, e.g., the second part 150 and the third part 160 are consecutive parts with respect to the route 120. In particular, the second lane recommendation may be computed such as to continue the first lane recommendation, e.g., such that the union of the first lane recommendation and the second lane recommendation comprise a (continuous) lane recommendation for the union of the second part 150 and the third part 160 of the route 120.

The third part 160 of the route 120 may be associated with road-level data, e.g., the third part 160 of the route 120 may inherit road-level data from the first road-level data associated with the first part 130 of the route 120. The third part 160 is associated with the manoeuvre points 140e, 140f, 140g, 140h. The beginning of the third part 160 is located in a vicinity of the end point 155 of the second part 150 and/or in a vicinity of the (last) manoeuvre point 140d associated with the first part 150. In particular, the third part 160 comprises the first safe stretch 170, e.g., a stretch of the route 120 associated with the first safe stretch 170 is also associated with the third part 160 of the route 120.

The end point 165 of the third part 160 is located in a vicinity of the third safe stretch 180, e.g., located in a vicinity of a beginning of the third safe stretch 180. For example, safe stretch 180, particularly the beginning of safe stretch 180, may be based on the manoeuvre points 140e, 140f, 140g, 140h associated with the third part 160. Specifically, the beginning of the third safe stretch 180 may be located in a vicinity of the (last) manoeuvre point 140h of the third part 160. Specifically, third part 160 is bounded and/or nested by the start points of two consecutive safe stretches, e.g., the third part 160 is bounded and/or nested by the start point of the first safe stretch 170 and the start point of the second safe stretch 180. In particular, the start point of the first safe stretch 170 may correspond to the start point of the third part 160 and the start point of the third safe stretch 180 may correspond to the end point 165 of the third safe stretch. For example, the end point 155 of the second part 150 may correspond to the beginning of a consecutive safe stretch, e.g., the beginning of the first safe stretch 170. Similarly, the end point 165 of the third part may correspond to the beginning of a consecutive safe stretch, e.g., the beginning of the second safe stretch 180.

After the computation of the first lane recommendation for the second part 150 and the computation of the second lane recommendation for the third part, a lane recommendation for the route 120 has been obtained for the union of the second part 150 and the third part 160. In other words, a lane recommendation is available from a current position of the vehicle 110 to the end point 165 of the third part 160. For the computation of a lane recommendation for a further part, e.g., a part of the route continuing the third part 160 along the route 120, a further safe stretch of the route may be computed and/or identified. The further safe stretch may comprise a safe stretch that is consecutive to the second safe stretch 180. However, according to the scenario depicted in Fig. 1A, a portion of the route 120 beginning with an end point of the second safe stretch 180 does not comprise a further safe stretch. Specifically, according to the scenario depicted in Fig. 1A, the (depicted) route 120 may be a stretch and/or part of a longer route, e.g., the route 120 may extend beyond the first portion 130. For example, see Fig. 1B, the route 120 may extend beyond the first portion 130 by the fourth portion 135, e.g., the fourth portion extends the first portion 130 and/or the route 120 as depicted in Fig. 1A.

In particular, a portion of the first part 130 beginning with an end point of the second safe stretch 180 does not comprise a further safe stretch. For example, the portion of the first part 130 beginning with an end point of the second safe stretch 180 is associated with manoeuvre points 140i, 140j. In particular, the manoeuvre points 140i, 140j may be located such that a distance between manoeuvre point 140i and manoeuvre point 140j is smaller than the pre-defined length threshold of the safe stretch. In other words, the length of the stretch defined by the manoeuvre points 140i, 140j may be too small to form a safe stretch.

As best illustrated in Fig. 1B, second road-level data for a fourth part 135 of the route 120 is obtained. The fourth 135 part of the route 120 extends the first part 130 along the route 120. For example, an end point 132 of the first part 130 may be located in a vicinity of a beginning of the fourth part 135. In particular, the end point 132 of the first part 130 may essentially correspond to the beginning of the fourth part 135. The fourth part 135 is associated with manoeuvre points 145a, 145b. Specifically, the manoeuvre point 145a associated with the fourth part 135 is a consecutive manoeuvre point with respect to manoeuvre point 140j associated with the first part 130. The fourth part 135 comprises a third safe stretch 190.

Specifically, the second road-level data for the fourth part 135 may be obtained when the first part 130 does not comprise at least two consecutive safe stretches extending beyond the third part 160 of the route. For example, the end point 165 of the third part 160 is located at a beginning of the second safe stretch 180. Thus, the second safe stretch 180 comprises a safe stretch extending beyond the third part 160 of the route, particularly beyond the end point 165 of the second part 160. The first part 130 does not comprise a further safe stretch, e.g., in addition to the second safe stretch 180, extending beyond the third part 160. In particular, the first part does not comprise further safe stretch, which extends beyond the third part 160 and which is consecutive to the second safe stretch 180. Consequently, the first part 130 comprises one safe stretch, e.g., the second safe stretch 180, extending beyond the third part 160, but not a further safe stretch extending beyond the third part 160. In such a situation, second road-level data for the fourth part 135 may be obtained.

In some embodiments, the first part 130 may only comprise one safe stretch, e.g., the safe stretch 170 but not the safe stretch 180. For example, the first safe stretch 170 may extend beyond the second part 150, particularly beyond the end point 155 of the second part 150. The end point 155 of the second part 150 is located at a beginning of the first safe stretch 170. In some embodiments, the end point 155 of the second part 150 may be located within the first safe stretch 170, e.g., the end point 155 of the second part may be shifted in the travel direction of the vehicle (shifted in right direction) along the route 120. In addition, or alternatively, the end point 155 of the second part 150 may be located at an end of the first safe stretch 170. Thus, the first part 130 comprises a (first) safe stretch extending beyond the second part 150, e.g., the first safe stretch 170. However, when the first part 130 does not comprise the second safe stretch 180, the first part 130 may not comprise a further (second) safe stretch extending beyond the second part 150. In particular, the first part 130 may not comprise a further safe stretch, which extends beyond the second part 150 and which is consecutive to the first safe stretch 170. In such a situation, second road-level data for the fourth part 135 may be obtained.

In some embodiments, when the road-level data for the fourth part 135 has been obtained, a third lane recommendation associated with a fifth part 195 of the route 120 may be computed based on third lane-level data associated with the fifth part 195. The fifth part 195 comprises a portion of the first part 130 and a portion of the fourth part 135. Specifically, the third lane recommendation may be computed such that the third lane recommendation extends to an end point of the fifth part 195 of the route. The end point of the third part may be located in a vicinity of the third safe stretch 190.

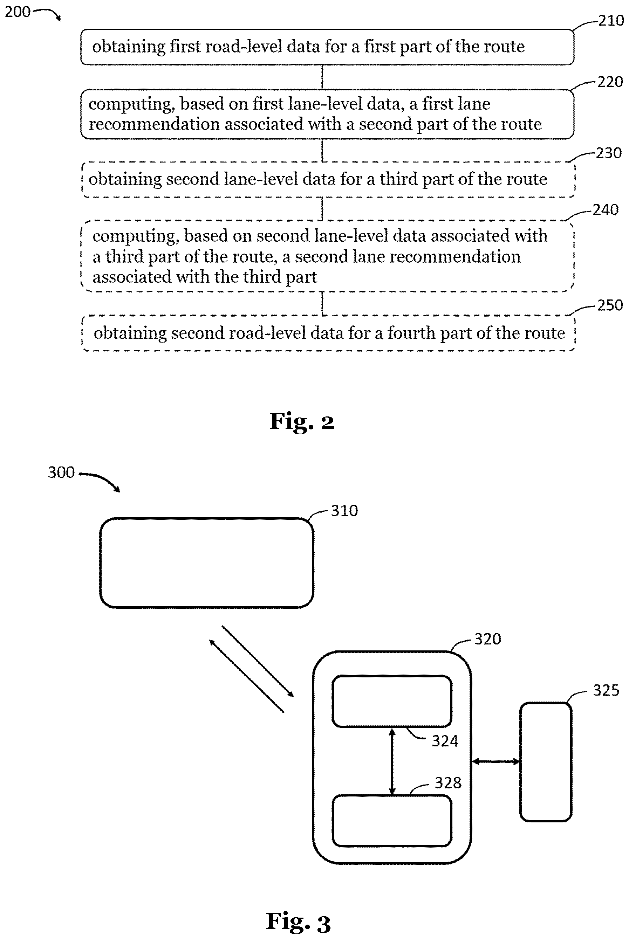

Figure 2 shows a flow diagram according to a method 200 for generating a lane recommendation for a drive of a vehicle. The method 200 comprises obtaining 210 first road-level data for a first part 130 of the route 120. Specifically, the first road-level data may be associated with a set of manoeuvre points 140a-140j for the drive of the vehicle 110.

In addition, the method 200 further comprises computing 220, based on first lane-level data, a first lane recommendation associated with a second part 150 of the route 120. Specifically, the first lane recommendation may reach from a current position of the vehicle to an end point 155 of the second part 150.

In some embodiments, the method 200 may further comprise obtaining 230 second lane-level data for a third part 160 of the route 120. For example, obtaining 230 the second lane-level data for the third part 160 of the route may comprise downloading the second lane-level data from a server and/or cloud storage.

In addition, or alternatively, the method 200 may comprise computing 240, based on second lane-level data associated with a third part 160 of the route 120, a second lane recommendation associated with the third part 160. For example, computing 240 the second lane recommendation associated with the third part 160 may comprise computing the second lane recommendation such as to continue the first lane recommendation associated with the second part 150 over the third part 160.

In addition, or alternatively, the method 200 may comprise obtaining 150 second road-level data for a fourth part 135 of the route 120.

Figure 3 shows a schematic illustration of a system 300 for generating a lane recommendation for a drive of a vehicle. The system 300 may comprise a server and/or a cloud storage 310. Specifically, the server and/or cloud storage 300 may comprise road-level data and/or lane-level data, e.g., road-level data and/or lane-level data associated with at least a part of a map. In particular, the road-level data may be associated with manoeuvre points. The server and/or cloud storage 300 may comprise at least one transceiver. The transceiver may be adapted to communicate bi-directionally, e.g., via one or more antennas, wired and/or wireless links. For example, the transceiver may comprise a wireless transceiver and may adapted to communicate bi-directionally with another wireless transceiver. The transceiver may also comprise a modem to modulate data packets. The modem may be adapted to provide the modulated packets to one or more antennas for transmission and/or to demodulate packets received from the one or more antennas.

The system 300 may further comprise an apparatus 320. The apparatus 320 may comprise at least one processor 328. In addition, or alternatively, the apparatus 320 may comprise at least one memory 324. The at least one processor 328 and the at least one memory 324 may be in electronic communication and/or otherwise coupled, e.g., operatively, communicatively, functionally, electronically, and/or electrically via one or more buses.

The apparats 320 may comprise at least one transceiver. The transceiver may be adapted to communicate bi-directionally, e.g., via one or more antennas, wired and/or wireless links. For example, the transceiver may comprise a wireless transceiver and may adapted to communicate bi-directionally with another wireless transceiver. Specifically, the at least one transceiver of the apparatus 320 may be adapted to communicate with the at least one transceiver of the server and/or cloud storage 310.

The memory 324 may comprise random access memory (RAM) and/or read-only memory (ROM). The memory 324 may store computer-readable, computer-executable code, e.g., comprising instructions that, when executed by the processor 328, cause the apparatus 320 to perform the method for generating a lane recommendation described herein. The code may be stored in a non-transitory computer-readable medium such as system memory or another type of memory. In some cases, the code may not be directly executable by the processor 328 but may cause a computer (e.g., when compiled and executed) to perform functions described herein. In some cases, the memory 324 may contain, among other things, a basic I/O system (BIOS) which may control basic hardware or software operation such as the interaction with peripheral components or devices.

The processor 328 may comprise an intelligent hardware device, e.g., a general-purpose processor, a DSP, a CPU, a microcontroller, an ASIC, an FPGA, a programmable logic device, a discrete gate and/or transistor logic component, a discrete hardware component, or any combination thereof. In some cases, the processor 328 may be configured to operate a memory array using a memory controller. In addition, or alternatively, a memory controller may be integrated into the processor 328. The processor 328 may be configured to execute computer-readable instructions stored in a memory, e.g., the memory 324 to cause the apparatus 320 to perform the method for generating a lane recommendation described herein.

In addition, or alternatively, the system 300, particularly the apparatus 320, may comprise a graphic user interface (GUI) 325. The GUI 325 may be communicatively coupled with the at least one processor 328 and/or the at least one memory 324.

## Claims

1. A computer-implemented method (200) for generating a lane recommendation for a drive of a vehicle (110) along a route (120), comprising:
obtaining (210) first road-level data for a first part (130) of the route (120), wherein the first road-level data is associated with a set of manoeuvre points (140a-140j) for the drive of the vehicle (110);
computing (220), based on first lane-level data, a first lane recommendation associated with a second part (150) of the route (120), the first lane recommendation reaching from a current position of the vehicle to an end point (155) of the second part (150),
wherein the end point (155) of the second part (150) is located in a vicinity of a first safe stretch (170);
wherein the first safe stretch (170) comprises at least one of:
(i) a portion associated with the first part (130) of the route without manoeuvre points (140a-140j), and
(ii) a portion associated with the first part (130) of the route without a change in a lane configuration.

2. The computer-implemented method (200) for generating the lane recommendation according to claim 1, wherein the second part (150) is a sub-part of the first part (130).

3. The computer-implemented method (200) for generating the lane recommendation according to claim 1 or claim 2, further comprising:
computing (240), based on second lane-level data associated with a third part (160) of the route (120), a second lane recommendation associated with the third part (160) to an end point (165) of the third part (160),
wherein the end point (165) of the third part (160) is located in a vicinity of a second safe stretch (180);
wherein the second safe stretch (180) comprise at least one of:
(i) a portion associated with the first part (130) of the route without manoeuvre points (140a-140j); and
(ii) a portion associated with the first part (130) of the route without a change in a lane configuration.

4. The computer-implemented method (200) for generating the lane recommendation according to claim 3, wherein the second lane recommendation is computed such as to continue the first lane recommendation associated with the second part (150) over the third part (160).

5. The computer-implemented method (200) for generating the lane recommendation according to one of the claims 1 to 4, wherein the first and/or second safe stretch is configured such that a length associated with the respective safe stretch is longer than a pre-defined threshold.

6. The computer-implemented method (200) for generating the lane recommendation according to one of the claims 1 to 5, wherein computing the first and/or second lane recommendation is based on an optimization of a cost function; preferably
wherein the cost function is based on:
a number of required lane changes; and/or
an expected driving time.

7. The computer-implemented method (200) for generating the lane recommendation according to claim 3, claim 4 or one of claims 5 to 6 when dependent on claim 3, wherein computing the second lane recommendation comprises:
obtaining (250) second road-level data for a fourth part (135) of the route associated with the route (120), the fourth part (135) extending the first part (130) along the route (120).

8. The computer-implemented method (200) for generating the lane recommendation according to claim 7, wherein the second road-level data for the fourth part (135) is obtained:
when the first part (130) does not comprise at least two consecutive safe stretches extending beyond the second part (150) and/or third part (160); optionally wherein the second road-level data for the fourth part (135) is obtained such that the second road-level data for the fourth part (135) comprises a safe stretch (190); and/or
based on a current position of the vehicle (110); optionally when the current position of the vehicle (110) approaches an end point (132) of the first part (130); and/or
based on a predefined and/or expected time interval of the vehicle (110);and optionally the predefined and/or expected time interval of the vehicle is a travel time from the current position of the vehicle (110) towards the end point (132) of the first part (130).

9. The computer-implemented method (200) for generating the lane recommendation according to claim 7 or claim 8, wherein computing the second lane recommendation based on the second lane-level data associated with the third part (160) comprises obtaining the second lane-level data for the third part (160); optionally wherein obtaining the second lane-level data comprises downloading the second lane-level data from a server and/or cloud storage.

10. The computer-implemented method (200) for generating the lane recommendation according to claim 9, wherein the second lane-level data for the third part (160) is obtained for a part (160) bounded by the start points (155, 165) of two consecutive safe stretches (170, 180).

11. The computer-implemented method (200) for generating the lane recommendation according to one of the claims 1 to 10, comprising the following iteration:
computing a (N+1)^{th} lane recommendation for the drive of the vehicle associated with a (N+1)^{th} sub-part of at least one M^{th} part;
wherein the (N+1)^{th} lane recommendation continues the N^{th} lane recommendation over the (N+1)^{th} sub-part.

12. The computer-implemented method (200) for generating the lane recommendation according to claim 11, wherein the iteration terminates when:
an end point of the (N+1)^{th} lane recommendation reaches a destination of the route (120).

13. An apparatus (300) comprising at least one processing unit configured to perform the method (200) according to one of the claims 1 to 12.

14. A computer program comprising instructions which, when the program is executed by a computer, cause the computer to carry out the method of any of claims 1 to 12.

15. A vehicle comprising the apparatus of claim 13 and/or a computer to execute the computer program of claim 14.
